# EUROPEAN PATENT APPLICATION

(11) **EP 4 478 300 A1**
(43) Date of publication of application: **18.12.2024**
(21) Application number: 24174790.6
(22) Date of filing: 08.05.2024
(51) Int. Cl.: G06V 10/764, G06V 10/774, G06V 10/80, G06V 10/82

(54) **MACHINE LEARNING PROGRAM, DETERMINATION PROGRAM, AND MACHINE LEARNING DEVICE**

(30) Priority: 14.06.2023 JP 2023098057
(71) Applicant: FUJITSU LIMITED, Kawasaki-shi, Kanagawa 211-8588 (JP)
(72) Inventor: YAMADA, Moyuru, 560037 Varthur Hobli, Old Airport Rd, Bangalore (IN); TAKEMOTO, Kentaro, Kawasaki-shi, Kanagawa, 211-8588 (JP)
(74) Representative: Hoffmann Eitle

(57) **Abstract**

A machine learning program including instructions which, when executed by a computer, cause the computer to execute processing including: generating vector information based on a first feature of a target included in an image, a second feature of the target, and conversion parameters; and executing training of a machine learning model and update of the conversion parameters by inputting the image and the vector information to the machine learning model, the machine learning model including a first machine learning model portion configured to identify the first feature and a second machine learning model portion configured to identify the second feature.

## Description

### FIELD

The embodiments discussed herein are related to a machine learning program, a determination program, and a machine learning device.

### BACKGROUND

A machine learning model such as a neural network is widely used to identify a target such as an object or the like present in an image given as an input. For example, there has been proposed an object identification apparatus that identifies an identification target object from a determination image. This apparatus evaluates a feature amount of a determination image based on feature amounts of partial features, calculates an evaluation value for each partial feature, acquires a weight of reliability associated with each partial feature based on the evaluation value, and calculates a weight sum that is a sum of the acquired weights of reliability. This apparatus calculates a combination matching degree that is a matching degree between a combination of partial features each having the evaluation value determined to be equal to or greater than a predetermined value, and a combination of partial features for an identification target object learned in advance. If the weight sum is equal to or greater than a predetermined value and the combination matching degree is equal to or greater than a predetermined value, this apparatus determines that the identification target object is identified from the determination image.

For example, there has been proposed another apparatus in which sample data having labels assigned according to preset conditions is given to combination feature amounts each calculated in advance based on individual feature amounts of individual shapes of multiple sample objects. This apparatus includes a machine learning unit that derives determination criteria for assigning the labels to various combination feature amounts from the sample data and stores the determination criteria. This apparatus extracts individual feature amounts of shapes of individual objects, calculates a combination feature amount, and identifies a label to be assigned to the calculated combination feature amount based on the determination criteria.

For example, there has been proposed an image recognition apparatus that stores feature information indicating image features of multiple types of objects obtained by learning processing. In order to classify an input image, this apparatus extracts descriptors representing feature amounts from the input image, votes the descriptors to the corresponding image vocabularies, calculates an existence probability of one or more objects based on a result of the voting, and identifies a type of an existing object based on the existence probabilities. When calculating an existence probability of each object, this apparatus uses an exclusive classifier to adjust the existence probability based on exclusive relationship information representing a combination of multiple different types of objects (object labels) predicted not to coexist in a same image.

Japanese Laid-open Patent Publication Nos. 2011-113360 and 2018-169922 and International Publication Pamphlet No. WO 2012/032788 are disclosed as related art.

### SUMMARY

### TECHNICAL PROBLEM

In a task of determining a target in an image by using a machine learning model, an addition of a new target or a change in a target inevitably involves preparing training data on the target and retraining the machine learning model, which leads to an increase in a work cost. The work cost is enormous, for example, in a case where there are many types of targets, where a target is frequently added or changed, or the like.

According to one aspect, an object of the disclosed technique is to reduce a work cost for retraining a machine learning model when a target is added or changed.

### SOLUTION TO PROBLEM

According to an aspect of the embodiments, there is provided a machine learning program including instructions which, when executed by a computer, cause the computer to execute processing including: generating vector information based on a first feature of a target included in an image, a second feature of the target, and conversion parameters; and executing training of a machine learning model and update of the conversion parameters by inputting the image and the vector information to the machine learning model, the machine learning model including a first machine learning model portion configured to identify the first feature and a second machine learning model portion configured to identify the second feature.

### ADVANTAGEOUS EFFECTS OF INVENTION

As one aspect, the disclosed technique produces an effect that makes it possible to reduce a work cost for retraining of a machine learning model when a target is added or changed.

### BRIEF DESCRIPTION OF DRAWINGS

FIG. 1 is a diagram for explaining Reference Technique 1;
FIG. 2 is a diagram for explaining Reference Technique 2;
FIG. 3 is a diagram for explaining Reference Technique 3;
FIG. 4 is a diagram for explaining an outline of embodiments;
FIG. 5 is a functional block diagram of an information processing apparatus;
FIG. 6 is a block diagram illustrating an example of a determination model in a first embodiment;
FIG. 7 is a diagram for explaining an example of feature identification;
FIG. 8 is a diagram for explaining a schematic configuration of a computer that functions as the information processing apparatus;
FIG. 9 is a flowchart illustrating an example of machine learning processing;
FIG. 10 is a flowchart illustrating an example of determination processing;
FIG. 11 is a diagram illustrating a relationship between features; and
FIG. 12 is a block diagram illustrating an example of a determination model in a second embodiment.

### DESCRIPTION OF EMBODIMENTS

Before describing details of embodiments, problems in Reference Techniques in executing a task considered in the following embodiments will be described.

In the following embodiments, a task of determining whether or not a subject in an image given as an input matches a specific target object is considered. For example, a conceivable task is to detect a fraud by determining whether or not commodity information obtained by bar code scanning at a self-checkout counter matches a commodity actually present at that spot.

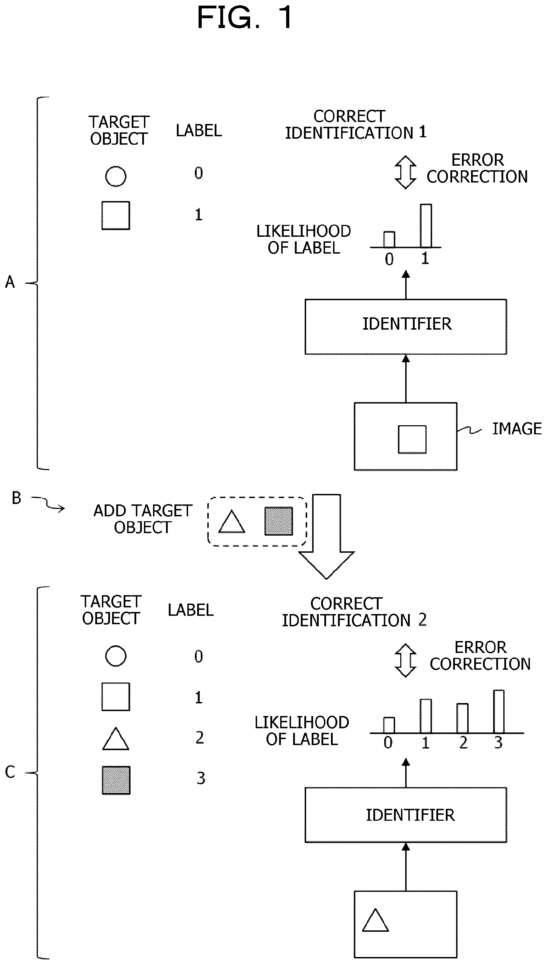

One of conceivable methods of carrying out the above-described task is a method including allocating a label to each target object and identifying the label of an object included in an input image with an identifier (hereafter, referred to as "Reference Technique 1") as illustrated in A of FIG. 1. In the example in FIG. 1, the identifier outputs the probability that the object identified from the image is each of the target objects, for example, the likelihood of each label. In Reference Technique 1, during training of the identifier, parameters of the identifier are updated so as to correct an error between an identification result based on the likelihood of each label output by the identifier and the correct label corresponding to an object in an input image.

However, since a single identifier is used in Reference Technique 1, every time a new target object is added as illustrated in B of FIG. 1 the entire identifier including the existing target objects has to be retrained as illustrated in C of FIG. 1. Since a single label is allocated to each target object, the number of labels is enormous when there are many types of target objects. In the above example of the self-checkout counter, since there are tens of thousands of commodities as target objects and target objects are added or changed frequently, it is difficult to allocate different labels to the respective target objects. Use of such an enormous number of labels is not practical because the calculation times for training the identifier and for identifying an object using the identifier increase, and the identification accuracy also decreases.

In the example illustrated in FIG. 1, there is an existing target object having features of a square shape and a white color, and a target object having features of a square shape and a green color (represented by a hatched pattern in FIG. 1, the same applies to the following drawings) is newly added. As in this example, even in a case where a target object having one of the features which is common to that of an existing target object is added, such as a case where a target object different in color from an existing target object is added, the labels have to be allocated to the respective target objects in Reference Technique 1.

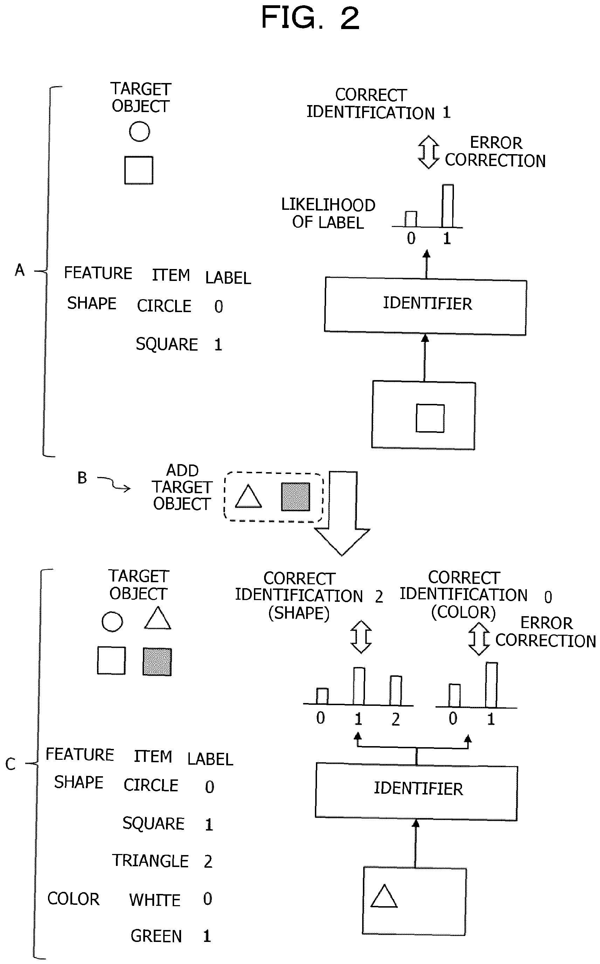

To address this, as illustrated in A of FIG. 2, there is another conceivable method including expressing each target object with a combination of features, and identifying each feature from an input image by using a single identifier (hereafter, referred to as "Reference Technique 2"). As illustrated in A of FIG. 2, in Reference Technique 2, in order to identify a target object for first training, labels are allocated to an item "circle" and an item "square" for a feature "shape". As illustrated in B of FIG. 2, in Reference Technique 2, in a case where new target objects are added, labels are newly allocated to a feature and items that do not exist in the existing feature, as features of the target objects to be added. In the example of B in FIG. 2, a target object having features of a triangular shape and a white color and a target object having features of a square shape and a green color are added. As illustrated in C of FIG. 2, an item "triangle" is added to the feature "shape" and items "white" and "green" are also added to the feature "color". In Reference Technique 2, the entire identifier including the labels allocated to these added items is retrained. For example, in Reference Technique 2, every time a feature or an item is added due to an addition of a target object, the entire identifier has to be retrained, and the retraining also affects the identification accuracy of the existing features.

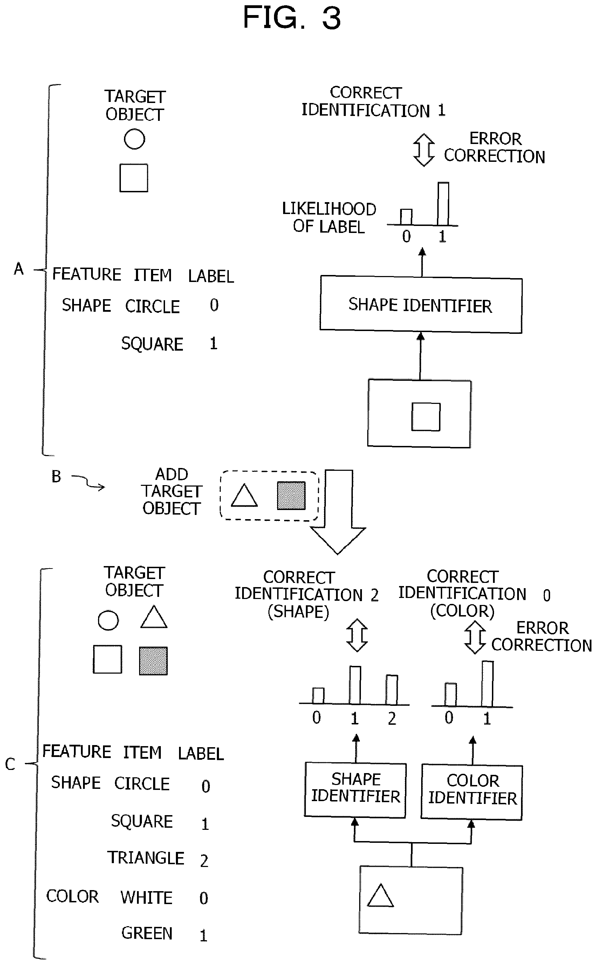

To address this, as illustrated in A of FIG. 3, there is still another conceivable method including expressing each target object with a combination of features and preparing identifiers each for identifying only a single feature (hereafter, referred to as "Reference Technique 3"). FIG. 3 illustrates an example in which only a shape identifier for identifying a feature "shape" is included at first, and then, with an addition of target objects as illustrated in B of FIG. 3, a color identifier for identifying a feature "color" is added as illustrated in C of FIG. 3. In Reference Technique 3, whether or not an object in an image is a target object is identified by integrating outputs of the identifiers for respective features. For this reason, Reference Technique 3 inevitably involves additional processing of integrating the outputs of the identifiers.

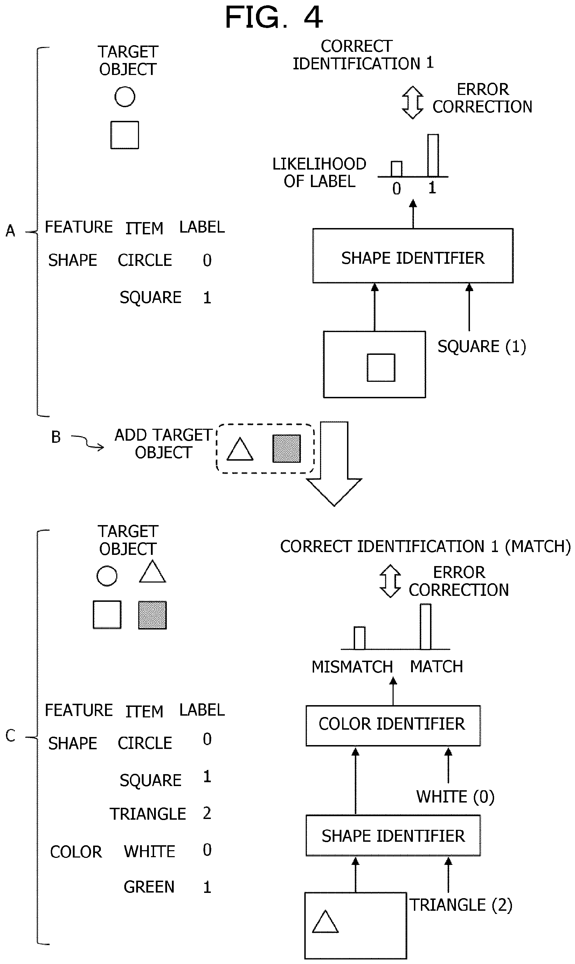

As illustrated in A of FIG. 4, a method in the following embodiments (hereafter, also referred to as "Present Technique") includes preparing identifiers for respective features, each of the identifiers configured to identify only a single feature, and giving labels indicating features of a target object (hereafter, referred to as "feature labels") and an image as inputs to the identifiers. The "features" in the present embodiments are substantially invariant features of a target object, and are, for example, a shape, a color, a material, a size, and the like.

In Present Technique, a correspondence between a feature of a subject in an image identified by an identifier and a feature label is determined. In Present Technique, in a case where an identifier for a new feature is added with an addition of target objects as illustrated in B of FIG. 4, the identifiers are coupled and combined such that an output of one of the identifiers is an input to the other identifier. Accordingly, the output of the final-stage identifier is information indicating a combination of the features of an object in an image. The order in which the features are combined, for example, the order in which the identifiers are coupled may be any order. Hereinafter, the embodiments will be described in detail.

### <First Embodiment>

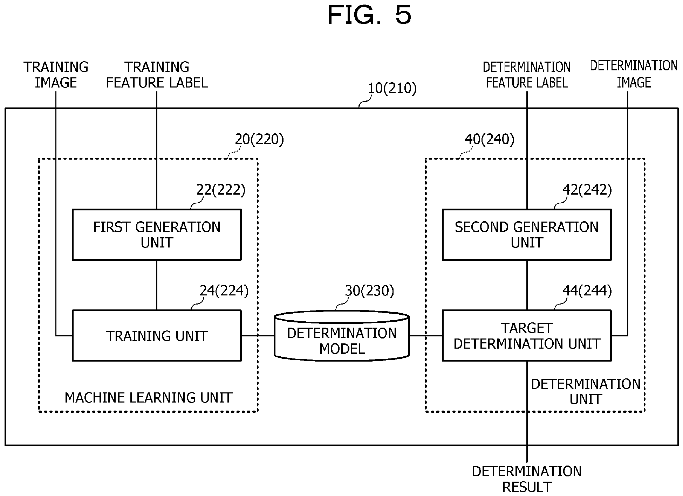

An information processing apparatus 10 according to a first embodiment functionally includes a machine learning unit 20 and a determination unit 40 as illustrated in FIG. 5. The machine learning unit 20 includes a first generation unit 22 and a training unit 24. The determination unit 40 includes a second generation unit 42 and a target determination unit 44. The machine learning unit 20 is an example of a machine learning device of the disclosed technique, and the first generation unit 22 and the training unit 24 are an example of a control unit of the disclosed technique. A determination model 30 is stored in a predetermined storage area of the information processing apparatus 10.

An image and feature labels are input to the information processing apparatus 10. The image is, for example, an RGB image or the like obtained by capturing an image of a subject, and is input to the information processing apparatus 10 from a camera that captured the image of the subject or a predetermined storage area in which a file of the captured image is stored. For example, in the case of the above example of the self-checkout counter, the image is acquired by capturing an image of a commodity actually present on the spot. For example, the feature labels are acquired by scanning a bar code or the like attached to the commodity. As described above, in the present embodiment, the feature labels of the target object are given as an input.

An image and feature labels input for training are referred to as a training image and training feature labels, and an image and feature labels input for determination are referred to as a determination image and determination feature labels. The training image is an image in which an image of a target object is captured as a subject and in which features of the target object are given as training feature labels. For example, a correspondence (match) between the features of the target object in the training image and the features indicated by the training feature labels is known. On the other hand, a correspondence between the features of a subject in a determination image and the features of a target object indicated by the determination feature labels is unknown.

The determination model 30 includes a first machine learning model portion for identifying a first feature of a target object included in an image, a second machine learning model portion for identifying a second feature of the target object, and a vector converter for converting the feature labels into vector information.

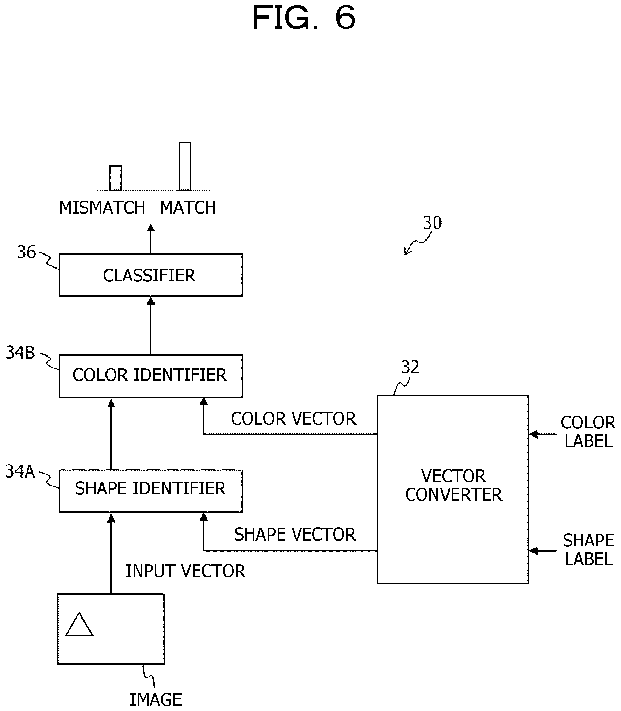

FIG. 6 illustrates an example of the determination model 30. In the first embodiment, description will be given of a case where the first feature is a "shape" of a target object and the second feature is a "color" of the target object. In this case, the determination model 30 includes a vector converter 32, a shape identifier 34A, a color identifier 34B, and a classifier 36. The shape identifier 34A, the color identifier 34B, and the classifier 36 are an example of the machine learning model of the disclosed technique, and the shape identifier 34A and the color identifier 34B are examples of the first machine learning model portion and the second machine learning model portion, respectively, of the disclosed technique.

The vector converter 32 receives an input of feature labels indicating features of a target object corresponding to an input image, the feature labels each allocated to a relevant item for each of the features of the target object. In the example illustrated in FIG. 6, among labels allocated to respective items of the feature "shape" (hereafter referred to as "shape labels"), a shape label allocated to an item "triangle" is input to the vector converter 32. Among labels allocated to respective items of the feature "color" (hereafter referred to as "color labels"), a color label allocated to an item "white" is input to the vector converter 32. The vector converter 32 converts each of the input feature labels into a vector by using a conversion parameter. Hereinafter, a vector obtained by converting the shape label is referred to as a shape vector, and a vector obtained by converting the color label is referred to as a color vector.

The shape identifier 34A is an identifier for identifying a "shape" that is one of features of a target object. A shape vector converted by the vector converter 32 and an input vector (details of which will be described later) generated from an image are input to the shape identifier 34A. The shape identifier 34A outputs information including a result of identifying a shape feature of a subject included in the image based on the input vector and the shape vector.

The color identifier 34B is an identifier for identifying a "color" that is the other one of the features of the target object. The color identifier 34B receives an input of the color vector converted by the vector converter 32 and the information output from the shape identifier 34A. The color identifier 34B outputs information including a result of identifying the shape and color features of the subject included in the image based on the color vector and the information output from the shape identifier 34A.

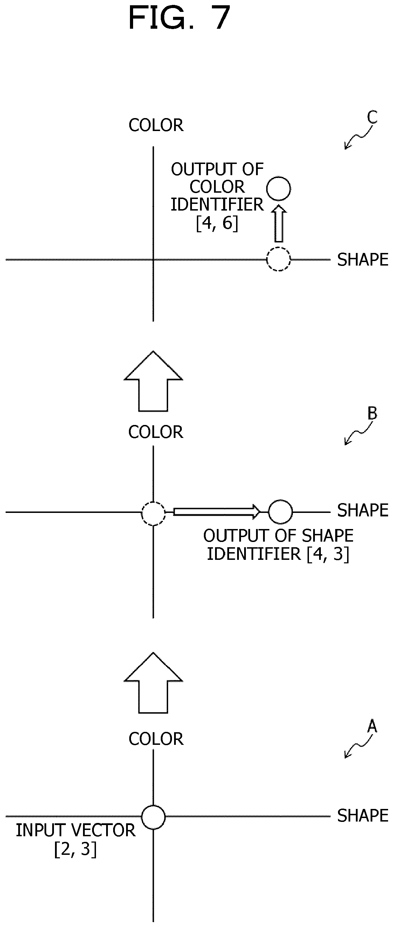

An example of identification of features by the shape identifier 34A and the color identifier 34B will be described with reference to FIG. 7. FIG. 7 illustrates a feature space with two dimensions of a shape and a color for simplification of description. As illustrated in A of FIG. 7, an input vector generated from an image ([2, 3] in an example of A of FIG. 7) is input to the shape identifier 34A. As illustrated in B of FIG. 7, the shape identifier 34A outputs a resultant vector obtained by reflecting a shape vector on this input vector ([4, 3] in an example of B of FIG. 7). As illustrated in C in FIG. 7, the color identifier 34B outputs a resultant vector obtained by reflecting a color vector on the above-output vector ([4, 6] in an example of C in FIG. 7). Accordingly, the vector output from the color identifier 34B is information indicating the identification result of the shape and the color of the subject in the input image.

Based on the vector output from the color identifier 34B, the classifier 36 classifies whether or not the shape and color features of the subject identified from the image match the shape and color features respectively indicated by the color label and the shape label, which are the feature labels of the target object. For example, the classifier 36 outputs both of a likelihood that the features match and a likelihood that the features do not match.

Each of the vector converter 32, the shape identifier 34A, the color identifier 34B, and the classifier 36 may be implemented by a machine learning model such as a neural network.

Next, the machine learning unit 20 will be described.

The first generation unit 22 acquires training feature labels indicating a first feature and a second feature input to the information processing apparatus 10, inputs the acquired training feature labels to the vector converter 32 of the determination model 30, and generates vector information. In the first embodiment, the first generation unit 22 acquires a shape label and a color label as the training feature labels, generates a shape vector from the shape label, and generates a color vector from the color label.

The training unit 24 acquires a training image input to the information processing apparatus 10, and compresses and converts the acquired training image into a format suitable to an input to the shape identifier 34A. For example, the training unit 24 converts the training image into an input vector with a specific number of dimensions by using an encoder. The training unit 24 inputs the input vector obtained by converting the acquired image, and the shape vector and the color vector generated by the first generation unit 22 to the shape identifier 34A and the color identifier 34B of the determination model 30. The training unit 24 trains each of the shape identifier 34A, the color identifier 34B, and the classifier 36 of the determination model 30 and updates the conversion parameters of the vector converter 32.

For example, the training unit 24 inputs the input vector and the shape vector to the shape identifier 34A. The training unit 24 inputs the vector output from the shape identifier 34A and the color vector to the color identifier 34B. As a result, the training unit 24 acquires a vector indicating an identification result of the shape and the color of the subject in the image. The training unit 24 inputs the acquired vector indicating the identification result to the classifier 36, and classifies whether or not the shape and color features of the subject identified from the training image match the features of the target object indicated by the training feature labels. Until the end condition of the machine learning is satisfied, the training unit 24 iterates update of the parameter of each of the shape identifier 34A, the color identifier 34B, and the classifier 36 of the determination model 30 and the conversion parameters of the vector converter 32 so that the classification result is a "match". For example, the end condition may be a case where the number of iterations reaches a predetermined number, a case where the likelihood of "match" output by the classifier 36 is equal to or greater than a predetermined value, or the like. The training unit 24 stores the determination model 30 in which the parameters at the time when the end condition is satisfied are set in a predetermined storage area of the information processing apparatus 10.

In the present embodiment, since the features of the subject included in the training image match the features of the target object indicated by the training feature labels, the parameters are updated so that the classification result is a "match". In a case of using a training image and training feature labels in which the features of a subject included in the training image do not match the features of a target object indicated by the training feature labels, the parameters may be updated so that the classification result is a "mismatch".

Next, the determination unit 40 will be described.

The second generation unit 42 acquires determination feature labels indicating the first feature and the second feature input to the information processing apparatus 10, inputs the acquired determination feature labels to the vector converter 32 of the trained determination model 30, and generates vector information. In the first embodiment, the second generation unit 42 acquires a shape label and a color label as determination feature labels, generates a shape vector from the shape label, and generates a color vector from the color label.

The target determination unit 44 acquires a determination image input to the information processing apparatus 10, and generates an input vector from the determination image in the same manner as in the training unit 24. The target determination unit 44 inputs the generated input vector and the shape vector and the color vector generated by the second generation unit 42 to the shape identifier 34A and the color identifier 34B of the trained determination model 30. The target determination unit 44 determines a correspondence relationship between the target object having the features indicated by the determination feature labels and the subject in the determination image.

For example, the target determination unit 44 determines whether or not the subject in the determination image is the target object having the features indicated by the determination feature labels, namely, the target object of interest, depending on whether or not the features identified from the determination image match the features indicated by the determination feature labels. For example, based on the likelihood of "match" and the likelihood of "mismatch", which are the outputs from the classifier 36 of the determination model 30, the target determination unit 44 determines that the subject in the determination image is the target object when the likelihood of "match" is higher than the likelihood of "mismatch". The target determination unit 44 outputs the determination result.

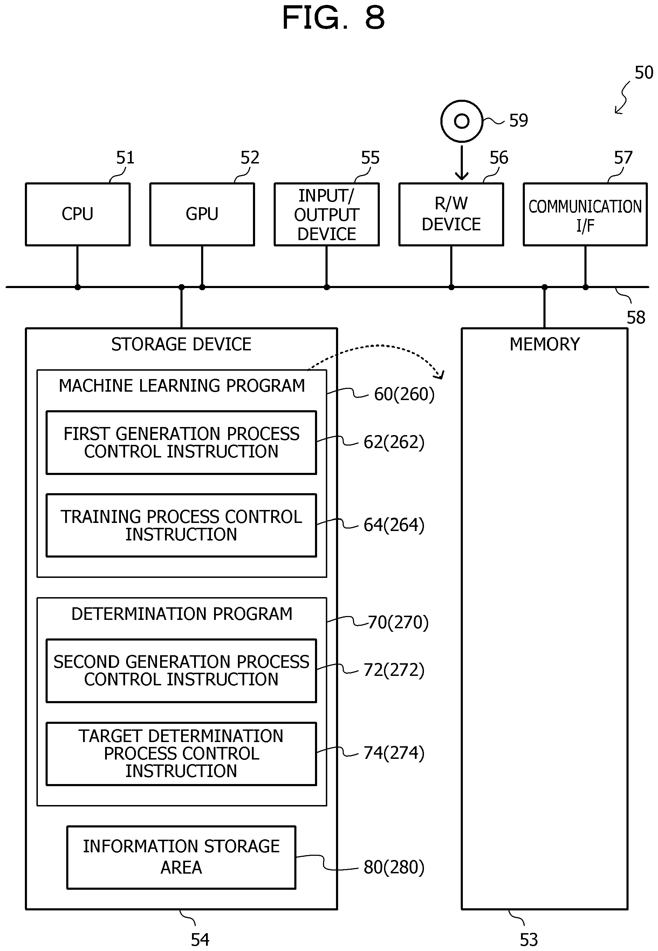

For example, the information processing apparatus 10 may be implemented by a computer 50 illustrated in FIG. 8. The computer 50 includes a central processing unit (CPU) 51, a graphics processing unit (GPU) 52, a memory 53 serving as a temporary storage area, and a nonvolatile storage device 54. The computer 50 also includes an input/output device 55 such as an input device and a display device, and a read/write (R/W) device 56 that controls reading and writing of data from and to a storage medium 59. The computer 50 includes a communication interface (I/F) 57 that is coupled to a network such as the Internet. The CPU 51, the GPU 52, the memory 53, the storage device 54, the input/output device 55, the R/W device 56, and the communication I/F 57 are coupled to each other via a bus 58.

For example, the storage device 54 is a hard disk drive (HDD), a solid-state drive (SSD), a flash memory, or the like. The storage device 54 as a storage medium stores a machine learning program 60 and a determination program 70 for causing the computer 50 to function as the information processing apparatus 10. The machine learning program 60 includes a first generation process control instruction 62 and a training process control instruction 64. The determination program 70 includes a second generation process control instruction 72 and a target determination process control instruction 74. The storage device 54 includes an information storage area 80 for storing information constituting the determination model 30.

The CPU 51 reads each of the machine learning program 60 and the determination program 70 from the storage device 54, develops the programs on the memory 53, and sequentially executes the control instructions included in each of the machine learning program 60 and the determination program 70. The CPU 51 operates as the first generation unit 22 illustrated in FIG. 5 by executing the first generation process control instruction 62. The CPU 51 operates as the training unit 24 illustrated in FIG. 5 by executing the training process control instruction 64. The CPU 51 operates as the second generation unit 42 illustrated in FIG. 5 by executing the second generation process control instruction 72. The CPU 51 operates as the target determination unit 44 illustrated in FIG. 5 by executing the target determination process control instruction 74. The CPU 51 reads the information from the information storage area 80 and loads the determination model 30 onto the memory 53. Accordingly, the computer 50 executing the machine learning program 60 functions as the machine learning unit 20 of the information processing apparatus 10, and the computer 50 executing the determination program 70 functions as the determination unit 40 of the information processing apparatus 10. The CPU 51 to execute the programs is hardware. Part of the programs may be executed by the GPU 52.

The functions implemented by each of the machine learning program 60 and the determination program 70 may be implemented by, for example, a semiconductor integrated circuit, or more specifically, an application-specific integrated circuit (ASIC), a field-programmable gate array (FPGA), or the like.

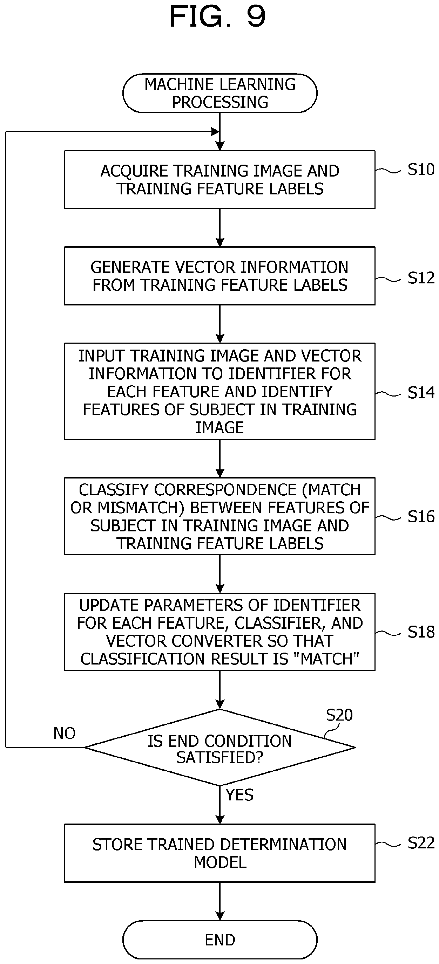

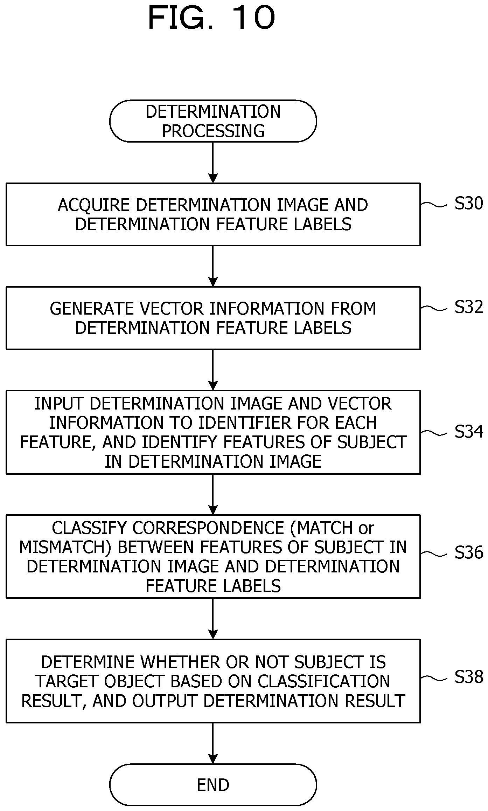

Next, operations of the information processing apparatus 10 according to the first embodiment will be described. When the information processing apparatus 10 is instructed to train the determination model 30 with inputs of a training image and training feature labels, the information processing apparatus 10 executes machine learning processing illustrated in FIG. 9. When the information processing apparatus 10 is instructed to determine a target object with inputs of a determination image and determination feature labels, the information processing apparatus 10 executes determination processing illustrated in FIG. 10.

First, the machine learning processing illustrated in FIG. 9 will be described.

At step S10, the first generation unit 22 acquires a shape label and a color label as training feature labels, and the training unit 24 acquires a training image. Next, at step S12, the first generation unit 22 inputs both of the acquired shape label and color label to the vector converter 32 of the determination model 30 to generate a shape vector and a color vector.

Next, at step S14, the training unit 24 generates an input vector from the acquired training image, and inputs the input vector and the shape vector to the shape identifier 34A. The training unit 24 inputs the vector output from the shape identifier 34A and the color vector to the color identifier 34B and thereby acquires a vector indicating an identification result of the shape and the color of the subject in the image.

Next, at step S16, the training unit 24 inputs the acquired vector indicating the identification result to the classifier 36, and classifies the correspondence (match or mismatch) between the shape and color features of the subject identified from the training image and the features of the target object indicated by the training feature labels. Next, at step S18, the training unit 24 updates the respective parameters of the shape identifier 34A, the color identifier 34B, and the classifier 36 of the determination model 30 and the conversion parameters of the vector converter 32 so that the classification result is a "match".

Next, at step S20, the training unit 24 determines whether or not an end condition of machine learning is satisfied. The processing proceeds to step S22 if the end condition is satisfied, or returns to step S10 if the end condition is not satisfied. At step S22, the training unit 24 stores the trained determination model 30 in which the parameters at the time when the end condition is satisfied are set in the predetermined storage area of the information processing apparatus 10, and the machine learning processing ends.

Next, the determination processing illustrated in FIG. 10 will be described.

At step S30, the second generation unit 42 acquires a shape label and a color label as determination feature labels, and the target determination unit 44 acquires a determination image. Next, at step S32, the second generation unit 42 inputs both of the acquired shape label and color label to the vector converter 32 of the trained determination model 30 to generate a shape vector and a color vector.

Next, at step S34, the target determination unit 44 generates an input vector from the acquired determination image, and inputs the input vector and the shape vector to the shape identifier 34A. The target determination unit 44 inputs the vector output from the shape identifier 34A and the color vector to the color identifier 34B and thereby acquires a vector indicating an identification result of the shape and the color of the subject in the image.

Next, at step S36, the target determination unit 44 inputs the acquired vector indicating the identification result to the classifier 36, and classifies the correspondence (match or mismatch) between the shape and color features of the subject identified from the determination image and the features of the target object indicated by the determination feature labels. Next, at step S38, the target determination unit 44 determines whether or not the subject in the determination image is the target object based on the classification result at step S36 described above, and outputs the determination result. The determination processing is ended.

As described above, in the information processing apparatus according to the first embodiment, the machine learning unit generates vector information based on the first feature of a target object and the second feature of the target object included in a training image, and the conversion parameters. The machine learning unit inputs the training image and the vector information to the machine learning model including the first identifier for identifying the first feature and the second identifier for identifying the second feature, and executes training of the machine learning model and update of the conversion parameters. Accordingly, it is possible to reduce the work cost for retraining the machine learning model at the time of adding or changing a target.

For example, even when there are tens of thousands of types of target objects, the information processing apparatus according to the first embodiment expresses all the target objects with combinations of features. Accordingly, even when a target object is added, the machine learning model does not have to be retrained as long as the types of the features are unchanged. Even in a case where an identifier for a new feature is added, the identification accuracy of the existing features is not affected because the identifiers for identifying the respective features are independent. For example, the number of identifiers to be used may be changed in accordance with the number of features to be identified such that one identifier is used to identify only a color as a feature and three identifiers are used to identify a color, a shape, and a material as features.

In a case where an identifier is added to the machine learning model, the training of the machine learning model and the update of the conversion parameters are executed with the parameters of the existing identifiers fixed. Accordingly, it is possible to reduce the calculation cost for retraining.

### <Second Embodiment>

Next, a second embodiment will be described. In an information processing apparatus according to the second embodiment, the components same as or similar to those of the information processing apparatus 10 according to the first embodiment will be given the same reference signs, and detailed descriptions thereof will be omitted.

As illustrated in FIG. 5, an information processing apparatus 210 according to the second embodiment functionally includes a machine learning unit 220 and a determination unit 240. The machine learning unit 220 includes a first generation unit 222 and a training unit 224. The determination unit 240 includes a second generation unit 242 and a target determination unit 244. A determination model 230 is stored in a predetermined storage area in the information processing apparatus 210.

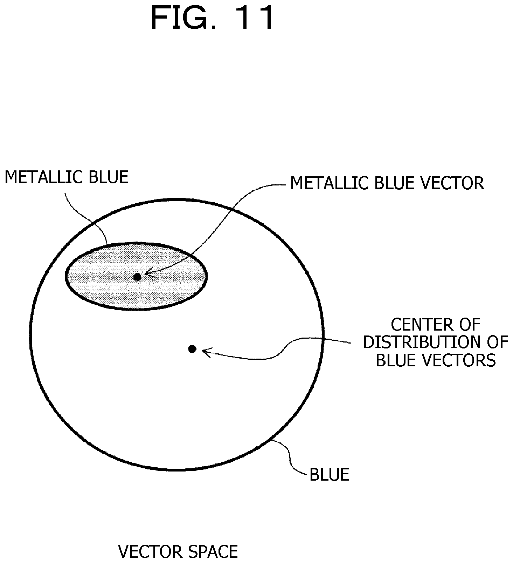

In the second embodiment, a case where a first feature is a "material" of a target object and a second feature is a "color" of the target object will be described. Even when objects are in the same color, the color appearance may differ between the objects depending on the materials of the objects. As illustrated in FIG. 11, in a vector space of features, it is assumed that metallic blue vectors form a distribution as indicated by a shaded ellipse in a distribution of color vectors indicating blue (also referred to as "blue vectors"). The likelihood output by the classifier 36 is assumed to be based on the distance between the center of the above latter distribution and a vector output by the color identifier 34B. For an object whose material is a metal and whose color is blue, the likelihood has to be higher as the distance to the center of the distribution of metallic blue vectors becomes smaller. However, the likelihood for a vector identified by the color identifier 34B using the blue vector without considering the relationship with the metal material is obtained based on the distance to the center of the distribution of the blue vectors, so that it is not possible to achieve the identification with high accuracy. To address this, in the second embodiment, vector information in consideration of a relationship between features is generated to identify the features of a subject in an image.

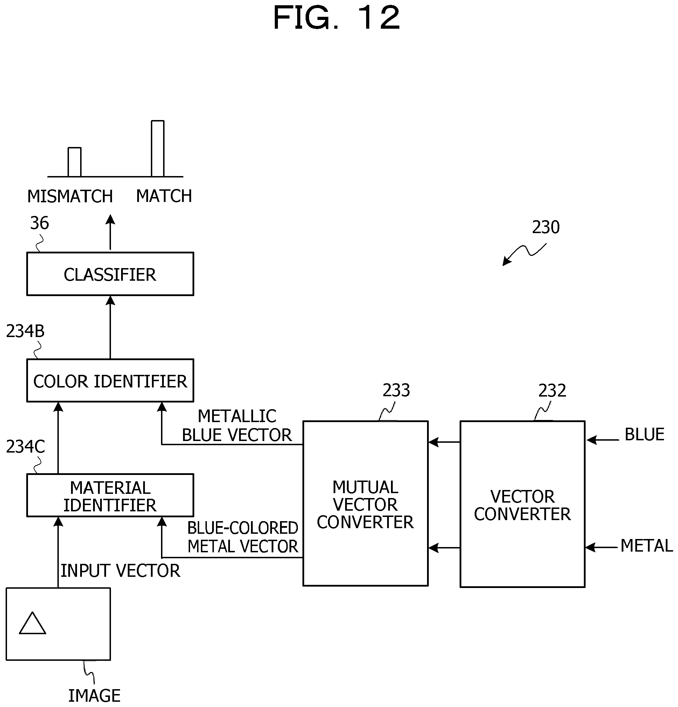

FIG. 12 illustrates an example of the determination model 230 according to the second embodiment. The determination model 230 includes a vector converter 232, a mutual vector converter 233, a material identifier 234C, a color identifier 234B, and a classifier 36. The material identifier 234C, the color identifier 34B, and the classifier 36 are an example of the machine learning model of the disclosed technology. The parameters of the vector converter 32 and the mutual vector converter 233 are an example of the conversion parameters of the disclosed technique.

As in the vector converter 32 according to the first embodiment, the vector converter 232 generates vector information from input feature labels. In the second embodiment, the vector converter 32 generates a material vector obtained by converting a material label and a color vector obtained by converting a color label.

The mutual vector converter 233 corrects the vector for each feature based on a relationship between the features. For example, the mutual vector converter 233 may be implemented by a natural language processing model such as Bidirectional Encoder Representations from Transformers (BERT). For example, as illustrated in FIG. 12, the vector converter 32 converts the feature label indicating blue into a blue vector and converts the feature label indicating the metal into a material vector indicating the metal (hereafter, also referred to as a "metal vector"). The blue vector and the metal vector are input to the mutual vector converter 233. The mutual vector converter 233 converts the blue vector into a metallic blue by correcting the blue vector based on the metal vector, and converts the metal vector into a blue-colored metal vector by correcting the metal vector based on the blue vector.

The material identifier 234C is an identifier for identifying a "material" that is one of features of a target object, and is an example of the first machine learning model portion. The material identifier 234C receives inputs of the material vector corrected by the mutual vector converter 233 (the blue-colored metal vector in the example of FIG. 12) and an input vector generated from an image. Based on the input vector and the corrected material vector, the material identifier 234C outputs information including a result of identifying the feature of the material of the subject included in the image.

The color identifier 234B is similar to the color identifier 34B in the first embodiment except that the color vector converted by the mutual vector converter 233 and the information output from the material identifier 234C are input.

Next, the machine learning unit 220 will be described.

As in the first generation unit 22 in the first embodiment, the first generation unit 222 acquires training feature labels, inputs the acquired training feature labels to the vector converter 232, and acquires a material vector and a color vector. The first generation unit 222 inputs the material vector and the color vector to the mutual vector converter 233, and generates a material vector corrected based on the color vector and a color vector corrected based on the material vector.

The training unit 224 inputs the corrected material vector and an input vector generated from the training image to the material identifier 234C. The training unit 224 inputs the information output from the material identifier 234C and the corrected color vector to the color identifier 234B. Points other than the above are the same as in the training unit 24 in the first embodiment.

Next, the determination unit 240 will be described.

The second generation unit 242 generates a corrected material vector and a corrected color vector from a material label and a color label, which are feature labels, by using the vector converter 232 and the mutual vector converter 233 in the same manner as the first generation unit 222.

The target determination unit 244 inputs the corrected material vector and an input vector generated from a determination image to the material identifier 234C. Points other than the above are the same as in the training unit 224.

The information processing apparatus 210 may be implemented by the computer 50 illustrated in FIG. 8. The storage device 54 of the computer 50 stores a machine learning program 260 and a determination program 270 for causing the computer 50 to function as the information processing apparatus 210. The machine learning program 260 includes a first generation process control instruction 262 and a training process control instruction 264. The determination program 270 includes a second generation process control instruction 272 and a target determination process control instruction 274. The storage device 54 includes an information storage area 280 for storing information constituting the determination model 230.

The CPU 51 reads each of the machine learning program 260 and the determination program 270 from the storage device 54, develops the programs on the memory 53, and sequentially executes the control instructions in each of the machine learning program 260 and the determination program 270. The CPU 51 operates as the first generation unit 222 illustrated in FIG. 5 by executing the first generation process control instruction 262. The CPU 51 operates as the training unit 224 illustrated in FIG. 5 by executing the training process control instruction 264. The CPU 51 operates as the second generation unit 242 illustrated in FIG. 5 by executing the second generation process control instruction 272. The CPU 51 operates as the target determination unit 244 illustrated in FIG. 5 by executing the target determination process control instruction 274. The CPU 51 reads the information from the information storage area 280 and loads the determination model 230 onto the memory 53. In this way, the computer 50 executing the machine learning program 260 functions as the machine learning unit 220 of the information processing apparatus 210, and the computer 50 executing the determination program 270 functions as the determination unit 240 of the information processing apparatus 210.

The functions implemented by each of the machine learning program 260 and the determination program 270 may be implemented by, for example, a semiconductor integrated circuit, or more specifically, an application-specific integrated circuit (ASIC), a field-programmable gate array (FPGA), or the like.

Next, operations of the information processing apparatus 210 according to the second embodiment will be described. When the information processing apparatus 210 is instructed to train the determination model 230 with inputs of a training image and training feature labels, the information processing apparatus 210 executes the machine learning processing illustrated in FIG. 9. When the information processing apparatus 210 is instructed to determine a target object with inputs of a determination image and determination feature labels, the information processing apparatus 210 executes the determination processing illustrated in FIG. 10.

Different points in the machine learning processing in the second embodiment from the machine learning processing in the first embodiment will be described. In the second embodiment, "material" is substituted for "shape" in the machine learning processing in the first embodiment. At step S12, the first generation unit 222 generates corrected vector information by also using the mutual vector converter 233.

Next, different points of the determination processing in the second embodiment from the determination processing in the first embodiment are described. In the second embodiment, "material" is substituted for "shape" in the determination processing in the first embodiment. At step S32, the second generation unit 242 generates corrected vector information by also using the mutual vector converter 233.

As described above, the information processing apparatus according to the second embodiment uses vector information corrected in consideration of a relationship between features to identify the features of a subject in an image. Accordingly, in addition to the effects of the first embodiment, the identification accuracy may be improved as compared with Reference Techniques 1 to 3 described above. For example, in the example of the second embodiment, features may be identified with a difference in color appearance between materials taken into consideration.

Although the case where the relationship between the material and the color is considered is described in the second embodiment, the second embodiment may be applied to a relationship between features other than the material and the color as long as the features affect each other.

Although the description is given of the case where the shape and the color are used as the features of the target object in the first embodiment and the case where the material and the color are used as the features of the target object in the second embodiment, the features are not limited to these. Depending on a target object, other features may be used, and a combination of features to be used may be set as appropriate.

Although the case where the machine learning unit and the determination unit are implemented by one computer is described in each of the embodiments, the machine learning unit and the determination unit may be implemented by different computers.

Although the machine learning program is stored (installed) in advance in the storage device in each of the above-described embodiments, the embodiments are not limited thereto. The programs according to the technique disclosed herein may be provided in a form of being stored in a storage medium such as a compact disc read-only memory (CD-ROM), a Digital Versatile Disc ROM (DVD-ROM), a Universal Serial Bus (USB) memory, or the like.

Regarding the above embodiments, the following appendixes are further disclosed.

## Claims

1. A machine learning program comprising instructions which, when executed by a computer, cause the computer to execute processing comprising:
generating vector information based on a first feature of a target included in an image, a second feature of the target, and conversion parameters; and
executing training of a machine learning model and update of the conversion parameters by inputting the image and the vector information to the machine learning model, the machine learning model including a first machine learning model portion configured to identify the first feature and a second machine learning model portion configured to identify the second feature.

2. The machine learning program according to claim 1, wherein
the generating of the vector information includes generating a first vector indicating the first feature and a second vector indicating the second feature.

3. The machine learning program according to claim 2, wherein
the generating of the vector information includes generating the first vector and the second vector that are corrected based on a relationship between the first feature and the second feature.

4. The machine learning program according to claim 3, wherein
the inputting of the vector information to the machine learning model includes inputting the first vector to the first machine learning model portion and inputting the second vector to the second machine learning model portion.

5. The machine learning program according to any one of claims 2 to 4, wherein
the machine learning model is configured such that an output of the first machine learning model portion and the second vector are input to the second machine learning model portion.

6. The machine learning program according to any one of claims 1 to 4, wherein
in a case where a third machine learning model portion configured to identify a third feature of the target included in the image is added to the machine learning model,
the generating of the vector information includes generating the vector information based on the first feature, the second feature, the third feature, and the conversion parameters, and
the executing of the training of a machine learning model and the update of the conversion parameters includes inputting the image and the vector information to the machine learning model in which parameters of both of the first machine learning model portion and the second machine learning model portion obtained by previous training are fixed.

7. A determination program comprising instructions which, when executed by a computer, cause the computer to execute processing comprising:
generating vector information based on a first feature of a target and a second feature of the target, and conversion parameters; and
inputting an image and the vector information to a machine learning model including a first machine learning model portion configured to identify the first feature and a second machine learning model portion configured to identify the second feature, and determining a correspondence relationship between the target and a subject in the image.

8. The determination program according to claim 7, wherein
the determining the correspondence relationship includes determining whether or not the first feature and the second feature of the target match a first feature identified in the first machine learning model portion and a second feature identified in the second machine learning model portion.

9. A machine learning apparatus comprising a control unit configured to perform processing comprising:
generating vector information based on a first feature of a target included in an image, a second feature of the target, and conversion parameters; and
executing training of a machine learning model and update of the conversion parameters by inputting the image and the vector information to the machine learning model, the machine learning model including a first machine learning model portion configured to identify the first feature and a second machine learning model portion configured to identify the second feature.
